# EUROPEAN PATENT SPECIFICATION

(11) **EP 3 440 870 B1**
(45) Date of publication and mention of the grant of the patent: **01.07.2026**
(21) Application number: 16898142.1
(22) Date of filing: 14.12.2016
(51) Int. Cl.: H04W 28/08, H04W 28/02, H04W 4/06, H04W 4/00, H04W 76/00

(54) **DEVICES AND METHODS FOR MEC V2X**
VORRICHTUNGEN UND VERFAHREN FÜR MEC V2X
DISPOSITIFS ET PROCÉDÉS POUR V2X MEC

(30) Priority: 05.04.2016 US 201662318623 P
(43) Date of publication of application: 13.02.2019
(73) Proprietor: Apple Inc., Cupertino, CA 95014 (US)
(72) Inventor: PINHEIRO, Ana Lucia, Hillsboro, Oregon 97124 (US); STOJANOVSKI, Alexandre Saso, 75020 Paris (FR); ADRANGI, Farid, Lake Oswego, Oregon 97035 (US)
(74) Representative: Greengrass, Matthew James
(86) International application number: PCT/US2016/066525
(87) International publication number: WO 2017/176329

(56) References cited:
- EP-A1- 2 811 747
- WO-A1-2015/019234
- WO-A1-2015/052917
- WO-A1-2015/147615
- WO-A1-2015/147615
- US-A1- 2013 078 945
- US-A1- 2014 274 069
- US-A1- 2014 274 069
- US-A1- 2014 282 747
- US-A1- 2016 255 539
- US-A1- 2017 230 993
- ZTE: "Enhancements for eNB type RSU and UE type RSU", vol. RAN WG2, no. Anaheim, USA; 20151116 - 20151120, 16 November 2015 (2015-11-16), XP051040401, Retrieved from the Internet <URL:http://www.3gpp.org/ftp/Meetings_3GPP_SYNC/RAN2/Docs/> [retrieved on 20151116]

## Description

### PRIORITY CLAIM

### TECHNICAL FIELD

Embodiments pertain to wireless communications. Some embodiments relate to wireless networks including 3GPP (Third Generation Partnership Project) networks, 3GPP LTE (Long Term Evolution) networks, 3GPP LTE-A (LTE Advanced) networks, and 5G networks, although the scope of the embodiments is not limited in this respect. Some embodiments relate to communication offloading and mobile edge computing (MEC) for vehicle-to-everything (V2X) direct communication systems.

### BACKGROUND

With the increase in different types of devices communicating with various network devices, usage of 3GPP LTE systems has increased. The penetration of mobile devices (user equipment or UEs) in modern society has continued to drive demand for a wide variety of networked devices in a number of disparate environments. The use of networked UEs using 3GPP LTE systems has increased in all areas of home and work life. Fifth generation (5G) wireless systems are forthcoming, and are expected to enable even greater speed, connectivity, and usability.

Recent fast evolution of cellular systems, such as LTE-Advanced and 5G, aims to support diverse use cases. In particular, the vehicle-to-enhancement and protocol design.

Another example can be found in non patent document ZTE: "Enhancements for eNB type RSU and UE type RSU",3GPP DRAFT; R2-156613, 16 November 2015.

The invention is defined by the appended independent claims and further embodiments are described by the dependent claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 illustrates aspects of a wireless communication network, in accordance with some embodiments.
FIG. 2 illustrates components of a wireless communication network, in accordance with some embodiments.
FIG. 3 illustrates components of a wireless communication network for V2X communication, in accordance with some embodiments.
FIG. 4 illustrates components of a wireless communication network for V2X communication, in accordance with a claimed embodiment.
FIG. 5 illustrates an example method for mobile edge computing (MEC) support for V2X services, in accordance with a claimed embodiment.
FIG. 6 illustrates an example method for mobile edge computing (MEC) support for V2X services, in accordance with a claimed embodiment.
FIG. 7 illustrates an example method for mobile edge computing (MEC) support for V2X services, in accordance with some embodiments.
FIG. 8 illustrates a communication message for MEC support in V2X services, in accordance with some embodiments
FIG. 9 illustrates aspects of a UE, in accordance with some example embodiments.
FIG. 10 is a block diagram illustrating an example computer system machine which may be used in association with various embodiments described herein.
FIG. 11 is a block diagram illustrating an example wireless communication system which may be used in association with various wireless devices for embodiments described herein.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

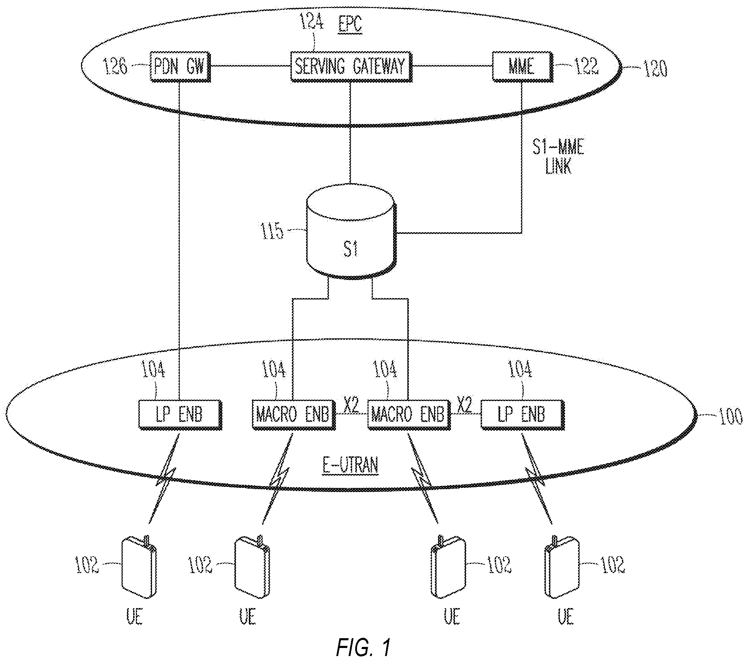

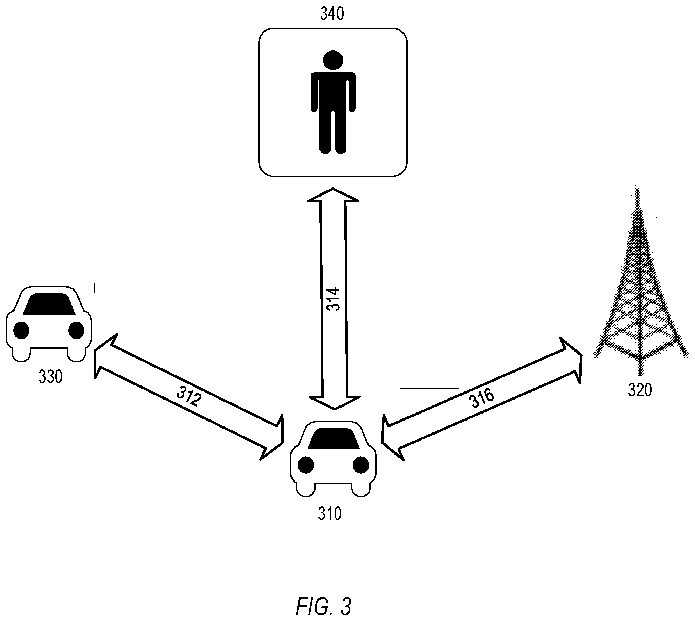

FIG. 1 shows an example of a portion of an end-to-end network architecture of a network (e.g., a Long Term Evolution (LTE) network) with various components of the network in accordance with some embodiments. Such a network architecture may be used for mobile edge computing (MEC) and offloading for vehicle based communications systems. For LTE based vehicle communications systems, UEs 102 and eNBs 104 illustrated in FIG. 1 are configured for communication between a vehicle and various other communications parties as further detailed below in FIG. 3. As used herein, "LTE network" refers to both LTE and LTE Advanced (LTE-A) networks as well as other versions of LTE networks in development, such as 4G and 5G LTE networks. The network may comprise a radio access network (RAN) (e.g., as depicted, the E-UTRAN or evolved universal terrestrial radio access network) 100 and a core network 120 (e.g., shown as an evolved packet core (EPC)) coupled together through an S1 interface 115. For convenience and brevity, only a portion of the core network 120, as well as the RAN 100, is shown in the example.

The core network 120 may include a mobility management entity (MME) 122, a serving gateway (S-GW) 124, and a packet data network gateway (PDN GW) 126. The RAN 100 may include evolved nodeBs (eNBs) 104 (which may operate as base stations) for communicating with user equipment (UE) 102. The eNBs 104 may include macro eNBs and low power (LP) eNBs 104. The eNBs 104 and UEs 102 may employ the techniques described herein.

The MME 122 may be similar in function to the control plane of legacy Serving GPRS Support Nodes (SGSN). The MME 122 may manage mobility aspects in access such as gateway selection and tracking area list management. As part of such operation, the MME 122 assists with providing context information describing a particular UE from S-GW 124 to an eNB 104 to enable the particular UE 102 to connect to the eNB 104. Such context information may be used by eNBs 104 to assist with determining functionality and various operations in establishing a connection (e.g., radio resource control (RRC) connections) between the eNB 104 and a particular UE 102.

The S-GW 124 may terminate the interface toward the RAN 100, and route data packets between the RAN 100 and the core network 120. In addition, the S-GW 124 may be a local mobility anchor point for inter-eNB handovers and also may provide an anchor for inter-3GPP mobility. Other responsibilities may include lawful intercept, charging, and some policy enforcement. As part of this functionality, at least a portion of the context information described above may be stored at the S-GW 124, and adjusted or communicated in communication with MME 122. In various embodiments, the S-GW 124 and the MME 122 may be implemented in one physical node or separate physical nodes.

The PDN GW 126 may terminate a SGi interface toward the packet data network (PDN). The PDN GW 126 may route data packets between the core network 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the S-GW 124 may be implemented in a single physical node or separate physical nodes.

The eNBs 104 (macro and micro) may terminate the air interface protocol and may be the first point of contact for a UE 102. In some embodiments, an eNB 104 may fulfill various logical functions for the RAN 100 including, but not limited to, RNC (radio network controller) functions such as radio bearer management, uplink and downlink dynamic radio resource management and data packet scheduling, and mobility management. In accordance with embodiments, the UEs 102 may be configured to communicate orthogonal frequency division multiplexed (OFDM) communication signals with an eNB 104 over a multicarrier communication channel in accordance with an orthogonal frequency-division multiple access (OFDMA) communication technique. The OFDM signals may comprise a plurality of orthogonal subcarriers.

The S1 interface 115 may be the interface that separates the RAN 100 and the core network 120. It may be split into two parts: the S1-U, which may carry traffic data between the eNBs 104 and the S-GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

Communication over an LTE network may be split up into 10ms radio frames, each of which may contain ten 1ms subframes. Each subframe of the frame, in turn, may contain two slots of 0.5ms. Each subframe may be used for uplink (UL) communications from the UE 102 to the eNB 104 or downlink (DL) communications from the eNB 104 to the UE 102. In one embodiment, the eNB 104 may allocate a greater number of DL communications than UL communications in a particular frame. The eNB 104 may schedule transmissions over a variety of frequency bands. Each slot of the subframe may contain 6-7 OFDM symbols, depending on the system used. In one embodiment, each subframe may contain 12 subcarriers. In the 5G system, however, the frame size (ms), the subframe size, and the number of subframes within a frame, as well as the frame structure, may be different from those of a 4G or LTE system. The subframe size, as well as the number of subframes in a frame, may also vary in the 5G system from frame to frame. For example, while the frame size may remain at 10ms in the 5G system for downward compatibility, the subframe size may be decreased to 0.2ms or 0.25 ms to increase the number of subframes in each frame.

A downlink resource grid may be used for downlink transmissions from an eNB 104 to a UE 102, while an uplink resource grid may be used for uplink transmissions from a UE 102 to an eNB 104 or from a UE 102 to another UE 102. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels 280, 285 to resource elements and physical RBs (PRBs). A PRB may be the smallest unit of resources that can be allocated to a UE 102. A RB in some embodiments may be 180 kHz wide in frequency and 1 slot long in time. In frequency, RBs may be either 12 x 15 kHz subcarriers or 24 x 7.5 kHz subcarriers wide, dependent on the system bandwidth. In frequency division duplexing (FDD) systems, both the uplink and downlink frames may be 10ms and frequency (full-duplex) or time (half-duplex) separated. The duration of the resource grid in the time domain corresponds to one subframe or two resource blocks. Each resource grid may comprise 12 (subcarriers) *14 (symbols) = 168 resource elements. As described above, cellular internet of things (CIoT) channels may assign single physical resource blocks to a channel that is directed to an individual device, whereas other systems may provide much larger amounts of bandwidth to an individual device.

Each OFDM symbol may contain a cyclic prefix (CP) which may be used to effectively eliminate inter symbol interference (ISI), and a fast fourier transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different 5G physical downlink channels 280, 285 that are conveyed using such resource blocks, including the 5G physical downlink control channel (xPDCCH) and the 5G physical downlink shared channel (xPDSCH). Each downlink subframe may be partitioned into the xPDCCH and the xPDSCH, and perhaps additional signals, as discussed below. The xPDCCH may occupy the first two symbols of each subframe and carry, among other information, information about the transport format and resource allocations related to the xPDSCH channel, as well as allocation and hybrid automatic repeat request (H-ARQ) information related to the 5G uplink shared channel (xPUSCH). The xPDSCH may carry user data and higher-layer signaling to a UE 102 and, in some embodiments, occupy the remainder of the subframe. Typically, downlink scheduling (assigning control and shared channel resource blocks to UE 102s within a cell) may be performed at the eNB 104 based on channel quality information provided from the UE 102s to the eNB 104, and then the downlink resource assignment information may be sent to each UE 102 on the xPDCCH used for (assigned to) the UE 102. The xPDCCH may contain DCI in one of a number of formats that indicate to the UE 102 how to find and decode data, transmitted on the xPDSCH in the same subframe, from the resource grid. The DCI format may provide details such as a number of resource blocks, resource allocation type, modulation scheme, transport block, redundancy version, coding rate, etc. Each DCI format may have a cyclic redundancy code (CRC) and be scrambled with a radio network temporary identifier (RNTI) that identifies the target UE for which the xPDSCH is intended. Use of the UE-specific RNTI may limit decoding of the DCI format (and hence the corresponding xPDSCH) to only the intended UE 102.

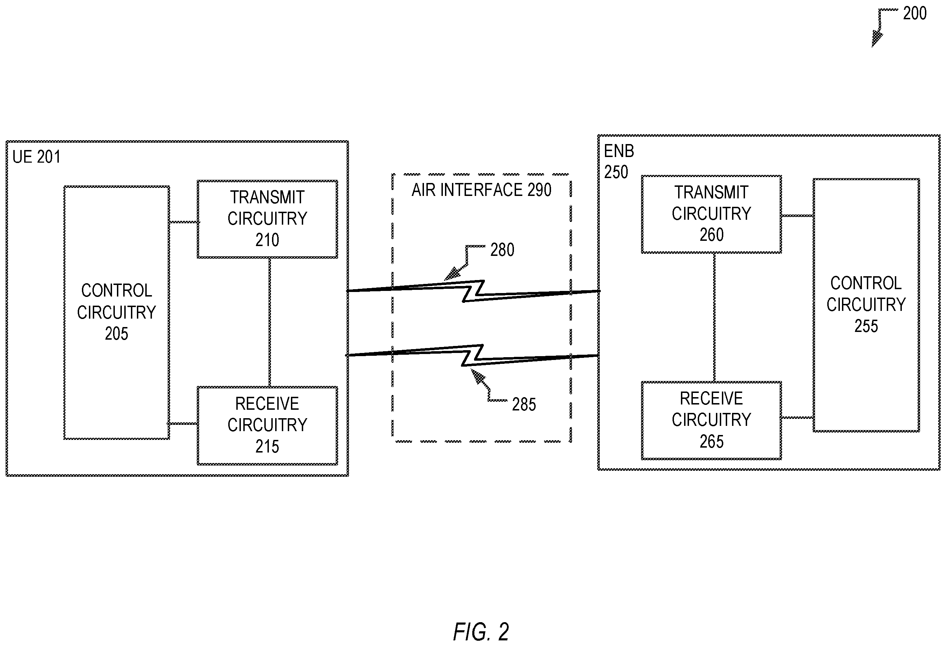

FIG. 2 illustrates a wireless network 200, in accordance with some embodiments. The wireless network 200 includes a UE 201 and an eNB 250 connected via one or more channels 280, 285 across an air interface 290. The UE 201 and eNB 250 communicate using a system that supports controls for managing the access of the UE 201 to a network via the eNB 250.

In the wireless network 200, the UE 201 and any other UE in the system may be, for example, laptop computers, smartphones, tablet computers, printers, machine-type devices such as smart meters or specialized devices for healthcare monitoring, remote security surveillance systems, intelligent transportation systems, or any other wireless devices with or without a user interface. The eNB 250 provides the UE 201 network connectivity to a broader network (not shown). This UE 201 connectivity is provided via the air interface 290 in an eNB service area provided by the eNB 250. In some embodiments, such a broader network may be a wide area network operated by a cellular network provider, or may be the Internet. Each eNB service area associated with the eNB 250 is supported by antennas integrated with the eNB 250. The service areas are divided into a number of sectors associated with certain antennas. Such sectors may be physically associated with fixed antennas or may be assigned to a physical area with tunable antennas or antenna settings adjustable in a beamforming process used to direct a signal to a particular sector. One embodiment of the eNB 250, for example, includes three sectors each covering an approximately 120 degree area with an array of antennas directed to each sector to provide 360 degree coverage around the eNB 250.

The UE 201 includes control circuitry 205 coupled with transmit circuitry 210 and receive circuitry 215. The transmit circuitry 210 and receive circuitry 215 may each be coupled with one or more antennas. The control circuitry 205 may be adapted to perform operations associated with wireless communications using congestion control. The control circuitry 205 may include various combinations of application specific circuitry and baseband circuitry. The transmit circuitry 210 and receive circuitry 215 may be adapted to transmit and receive data, respectively, and may include radio frequency (RF) circuitry or front end module (FEM) circuitry. In various embodiments, aspects of the transmit circuitry 210, receive circuitry 215, and control circuitry 205 may be integrated in various ways to implement the circuitry described herein. The control circuitry 205 may be adapted or configured to perform various operations such as those described elsewhere in this disclosure related to a UE 201. The transmit circuitry 210 may transmit a plurality of multiplexed uplink physical channels 280, 285. The plurality of uplink physical channels 280, 285 may be multiplexed according to time division multiplexing (TDM) or frequency division multiplexing (FDM) along with carrier aggregation. The transmit circuitry 210 may be configured to receive block data from the control circuitry 205 for transmission across the air interface 290. Similarly, the receive circuitry 215 may receive a plurality of multiplexed downlink physical channels 280, 285 from the air interface 290 and relay the physical channels 280, 285 to the control circuitry 205. The plurality of downlink physical channels 280, 285 may be multiplexed according to TDM or FDM along with carrier aggregation. The transmit circuitry 210 and the receive circuitry 215 may transmit and receive both control data and content data (e.g., messages, images, video, etc.) structured within data blocks that are carried by the physical channels 280, 285. For a machine configured for low bandwidth or irregular communications (e.g., utility meters, stationary sensors, etc.) customized circuitry and antennas may be used to enable communications on a narrow bandwidth (e.g., 180 kHz, or other similar narrow bandwidths) to enable the device to consume small amounts of network resources.

FIG. 2 also illustrates the eNB 250, in accordance with various embodiments. The eNB 250 circuitry may include control circuitry 205 coupled with transmit circuitry 260 and receive circuitry 265. The transmit circuitry 260 and receive circuitry 265 may each be coupled with one or more antennas that may be used to enable communications via the air interface 290.

The control circuitry 205 may be adapted to perform operations for managing channels 280, 285 and congestion control communications used with various UEs 201, including communication of open mobile alliance (OMA) management objects (OMA-MOs) describing application categories as detailed further below. The transmit circuitry 260 and receive circuitry 265 may be adapted to transmit and receive data, respectively, to any UE 201 connected to the eNB 250. The transmit circuitry 260 may transmit downlink physical channels 280, 285 comprised of a plurality of downlink subframes. The receive circuitry 265 may receive a plurality of uplink physical channels 280, 285 from various UEs including the UE 201. For compatibility with vehicle based communications such as vehicle to vehicle (V2V), vehicle to internet (V2I), or vehicle to person (V2P) communication, which may be collectively referred to as vehicle to anything (V2X) communications, UEs 201, an eNB 250 may be similarly configured with specialized hardware, software, and/or firmware to manage narrowband communications.

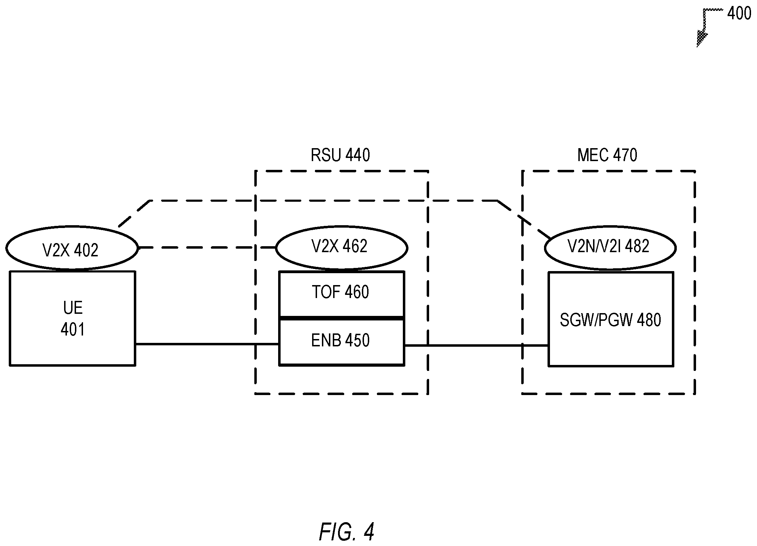

FIGs. 3 and 4 then illustrate aspects of communication systems configured for vehicle based operations. Intelligent transportation systems enabled by connected vehicles can improve safety and efficiency in roadways. Such vehicle based systems may be integrated with LTE systems to support vehicle applications. In such a context of vehicle communications, V2X Service refers to a type of communication service that involves a transmission or receiving UE 201 using V2X application. Based on the other party involved in the communication, it can be further divided into V2V Service, V2I Service, and V2P Service, which may cover any communications with a vehicle in different embodiments. FIG. 3 illustrates a vehicle 310 that uses V2X applications to communicate with vehicle 330 using V2V communications 312, with person 340 using V2P communications 314, and with network 320 using V2I communications 316

V2I Service is a type of V2X Service, where one party is a UE (e.g. UE 102, 201, 401, etc.) and the other party is a road side unit (e.g. RSU 440 which includes eNB 450) both using V2I application. V2V Service is a type of V2X Service, where both parties of the communication are UE 201 integrated with or associated with vehicles (e.g. vehicles 310, 330) that communicate using V2V applications. V2P Service involves a type of communication service that involves a first UE 201 supporting both V2V and V2P service (e.g. a UE 201 associated with vehicle 310) and a second UE supporting only V2P service (e.g. a UE 201 associated with person 340. An RSU 440 is an entity supporting V2I service that can transmit to, and receive from a UE 201 using V2I applications. In various embodiments, an RSU 440 is implemented in an evolved NodeB (eNB) 450 or a stationary UE 201. In an RSU 440, rebroadcasting of V2X messages for other vehicles (V2V), pedestrians (V2P), or various networks systems (V2I) may be performed. Such rebroadcasting is enabled using systems such as a multimedia broadcast multicast service (MBMS) for LTE as described, for example, in 3GPP TR 23.785 entitled study on architecture enhancements for LTE support of V2X services V1.0.0 (SP-160321) published on June 15, 2016.

In various embodiments in accordance with systems described herein, RSU 440 may include a V2X application server 462 integrated with an eNB 450. RSU 440 may also, in various embodiments, include a local gateway (LGW) and a multimedia broadcast multicast service gateway (MBMS-GW) coupled to a mobility management entity (MME) 122 and the evolved universal mobile telecommunications system (UMTS) terrestrial radio access (E-UTRAN) systems (e.g. the eNB 450.) RSU 440 may additionally include a multimedia broadcast multicast service gateway (MBMS-GW) that connects the MBMS-GW elements to a broadcast multicast service center (BM-SC). In such embodiments, the MB-SC couples the MBMS-GW to a V2X application server via the BM-SC.

Integrating an LGW in a RSU 440 may involve a new packet data network (PDN) connection with an LGW to be reestablished whenever a UE 201 moves to a new area. Given speeds at which a vehicle-mounted UE 201 may move, this may trigger significant signaling for PDN connection reestablishment as a vehicle (e.g. vehicle 330) moves between coverage areas of different RSU 440s. In addition, due to such possible UE velocity, in some cases a new PDN connection will not be re-established on time or before the vehicle-based UE 201 moves to still another RSU coverage area. In various such embodiments, failure to reestablish certain PDN connections may cause rebroadcasting of V2V and V2P messages to fail. Embodiments herein describe the use of an RSU 440 that, in some embodiments, reduces such failures and improves handling of V2X communications.

FIG. 4 provides details of a V2X communication system 400 as part of an embodiment where RSU 440 is integrated with an eNB 450, and RSU 440 implements offloading functions for V2X communications from UE 201s using traffic offloading function (TOF) module 460. In addition to UE 401 and RSU 440 that includes eNB 450, V2X communication system 400 also includes MEC 470 including gateway 480. UE 401, RSU 440, and MEC 470 each are associated with corresponding V2X applications 402, 462, and 482 as illustrated. FIG. 4 is a functional representation of devices UE 401, ENB 450, and SGW/PGW 480 with MEC and V2X functionality implemented via described elements integrated on top of these devices. Other embodiments may be implemented with different devices.

RSU 440 includes a traffic-offloading function (TOF) 460 for extracting traffic from a packed data network (PDN) connection established with a PDN gateway (PGW) 126 entity residing in the network 320. This type of PDN connection from UE 401 to MEC 470 is further referred to as a "macro" PDN connection, in contrast to a "local" PDN connection established with a local gateway (LGW).

In example embodiments, the vehicle-mounted UE 401 has a permanently established "macro" PDN connection with MEC 470 to enable messaging with the V2X network (V2N) or V2X architecture (V2I) of application 482, while at the same time the UE 401 may send V2V and V2P messages to the RSU 440 for the purpose of re-broadcasting them in the area around the UE 401 or sending to a local mobile edge computer (MEC) 470, represented in FIG. 4 as V2N/V2I application 482.

In embodiments of this architecture, there is reduced need or possibly no need, in some embodiments, to re-establish a new PDN connection as the UE 401 moves from one eNB 450 to another, because the "macro" PDN connection is anchored deep inside the mobile operator's network 320. The V2V/V2P messages sent by UE 401 are identified from the overall traffic flow at the eNB 450 using TOF 460, so that the messages may be offloaded and forwarded to the V2P/V2V application server 462 residing in the RSU 440 as integrated with eNB 450.

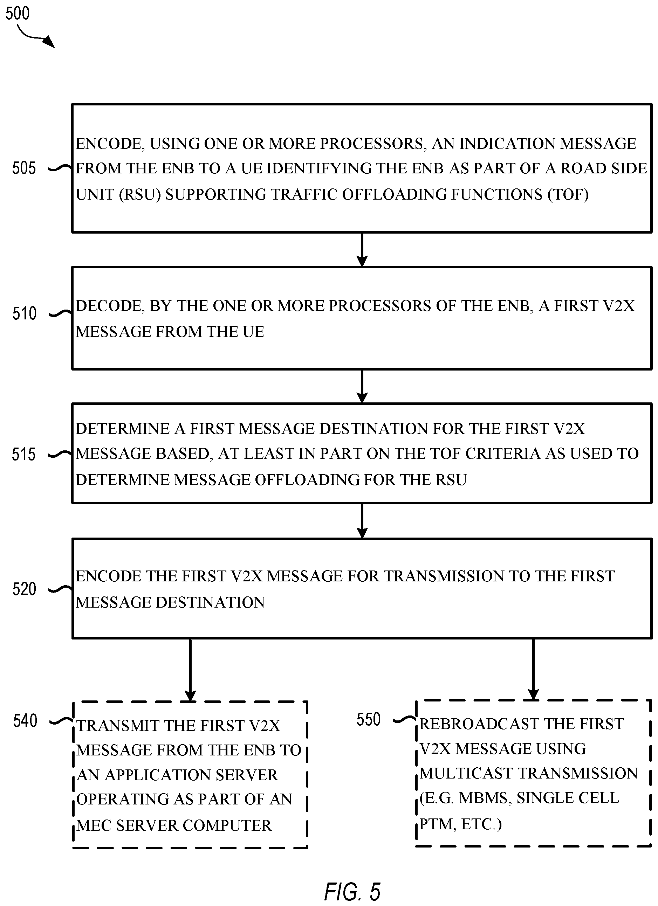

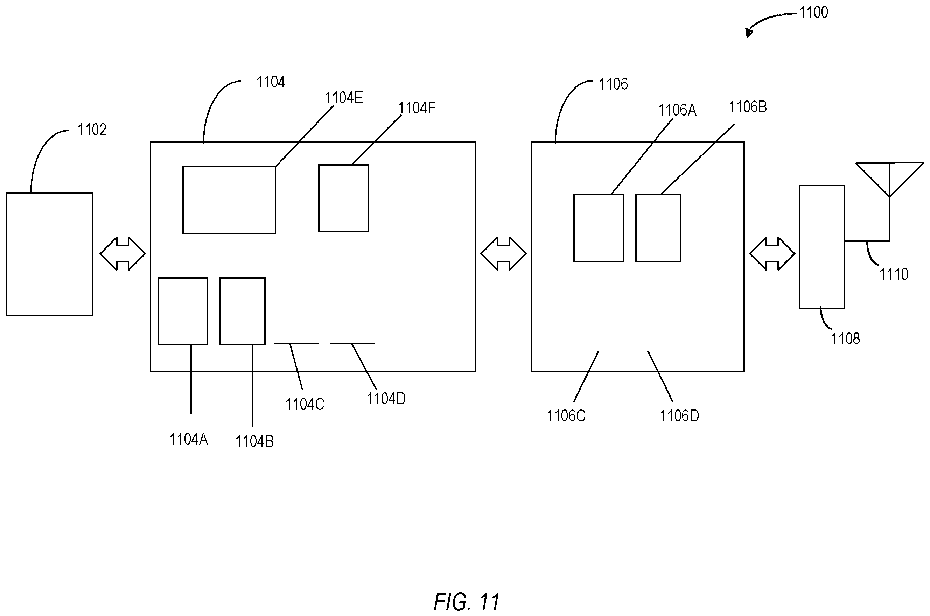

FIG. 5 illustrates one example method of MEC 470 operation for V2X services, in accordance with some embodiments. Method 500 describes operations performed at an eNB 450 in a system offering V2X services. In some embodiments, method 500 is performed by an apparatus of an eNB 450, similar to the baseband circuitry 1104 of FIG. 11. In other embodiments, other control circuitry 205 is configured to implement the operations of method 500. In still further embodiments, other aspects of an eNB 450, including any eNB 450 or circuitry for a device operating as an eNB 450 described herein, may perform method 500. Further, in some embodiments, method 500 may be embodied in storage memory or non-transitory computer-readable media as instructions that, when executed by one or more processors of an eNB 450 configured to support V2X operations and perform the operations of method 500. Method 500 may particularly be implemented by a road side unit system to provide signaling for V2X operations.

Method 500 begins with operation 505 where an apparatus of an eNB 450, operating as part of an RSU 440, encodes an indication message from the eNB 450 to a UE 401 identifying the eNB 450 as part of an RSU 440 supporting TOF 460.

In some embodiments, a broadcast channel is used to notify the UE 401 the fact that the eNB 450 supports RSU 440 with MEC 470 for V2X functionality. One embodiment of a system information block (SIB) used for such an indication message is shown below:
- SystemInformationBlockTypeX
The IE SystemInformationBlockTypeX contains V2X related parameters.

### SystemInformationBlockTypeX information element

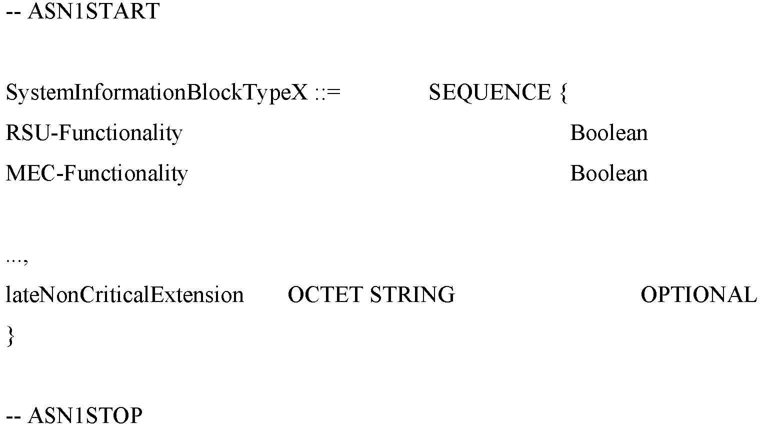

In other embodiments, such information for an indication message is added to existing SIBs. In further embodiments, such an indication message is added in a handover message. Other embodiments may use other such indication messages.

In operation 510, the apparatus decodes a first V2X message from the UE 401 and then, in operation 515, determines a first message destination for the first V2X message based, at least in part, on the TOF criteria as used to determine message offloading for the RSU 440. In operation 520, the apparatus of the eNB 450 encodes the first V2X message for transmission to the first message destination.

The first V2X message may be transmitted in different ways depending on the particular circumstances of the vehicle 310 transmitting the message and the target recipient device (e.g. another vehicle, an individual, etc.). In optional operation 540, the apparatus of the eNB 450 transmits the first V2X message from the eNB 450 to an AS operating as part of an MEC server computer (e.g. MEC 470). In other embodiments, the eNB 450 may be associated with systems for rebroadcasting. Optional operation 550 involves the first V2X message being rebroadcast using multicast transmission (e.g. multimedia broadcast multicast services (MBMS), single cell point to multipoint (PTM) transmission, etc.)

In various embodiments of method 500, the operations may be implemented in a variety of ways. In one embodiment, the eNB 450 determines the message destination using well known destination transport addresses. In such embodiments, assuming that the V2P/V2V messages use a well-known destination transport address (i.e. destination IP address and/or destination port number), the TOF systems of the eNB 450 can identify them by looking at the destination transport address fields.

In some embodiments, a dedicated evolved packet system (EPS) bearer is used. In such an embodiment, a dedicated EPS bearer on the "macro" PDN connection is used for exchanging traffic between the UE 401 and the RSU 440. Packets sent on the dedicated EPS bearer are extracted at the eNB 450 without deeper inspection. The dedicated EPS bearer is identified at the UE 401 and the eNB 450 by using a special QCI value, or by using an explicit NAS and S1-AP signaling parameter.

In some embodiments, an indication in a media access control (MAC) header or packet data convergence protocol (PDCP) header. In embodiments using a PDCP header, when sending a V2V/V2P message (e.g. in contrast to a V2N/V2I message) the UE 401 may set an indication in the corresponding PDCP header. This allows specialized processing where the destination (e.g. another vehicle 310 or person 340) may be nearby, moving, and need low latency for V2V or V2I service operations. With this approach the UE 401 may send the message either as an internet protocol (IP) packet or as a non-IP packet. The UE 401 may "hijack" any of the established EPS bearers, for example, depending on the QoS with which the message may be handled. Various embodiments using MAC and PDCP headers may be used in any fashion.

Additionally, while method 500 is described in the context of V2X communications, embodiments may also be used in other contexts where the UE 401 communicates with a local application server (e.g. MEC 470.)

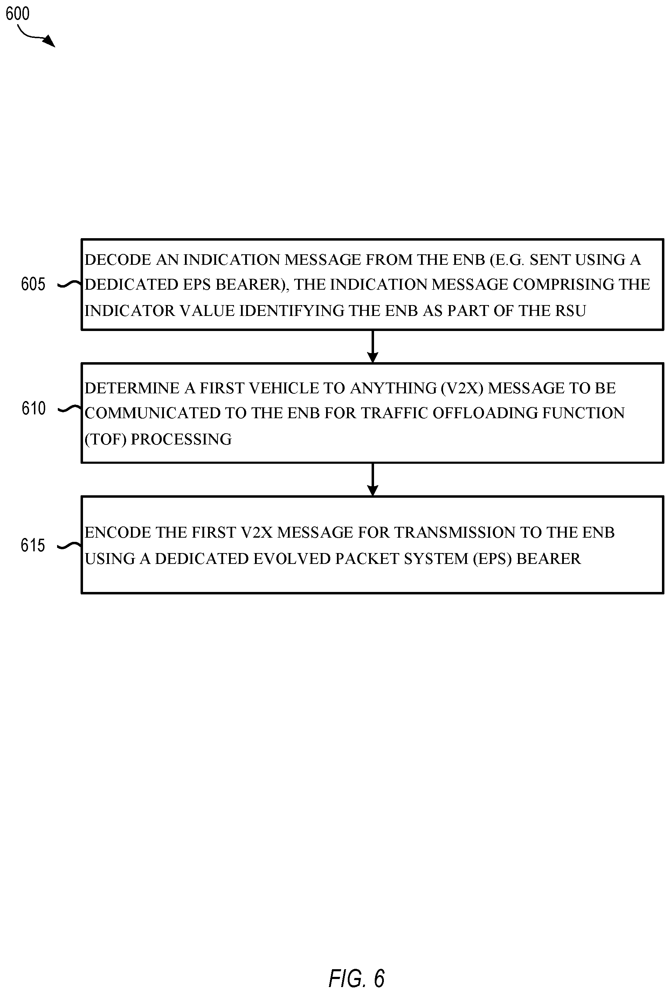

FIG. 6 illustrates one example method of MEC 470 operation for V2X services, in accordance with some embodiments. Method 600 corresponds to the ENB operations of method 500 and describes the related operations performed at a UE 401 supporting V2X services. In some embodiments, method 600 is performed by an apparatus of a UE 401, similar to the baseband circuitry 1104 of FIG. 11. In other embodiments, other control circuitry 205 is configured to implement the operations of method 600. In still further embodiments, other aspects of an UE 401, including any UE 401 or circuitry for a device operating as an UE 401 described herein, may perform method 600. Further, in some embodiments, method 600 may be embodied in storage memory or non-transitory computer-readable media as instructions that, when executed by one or more processors of an UE 401 configured to support V2X operations and perform the operations of method 600. Method 600 may particularly be implemented by a UE 401 in communication with a road side unit to provide signaling for V2X operations.

Method 600 involves an apparatus of a UE 401 decoding, in operation 605, an indication message from the eNB 450, the indication message comprising the indicator value identifying the eNB 450 as part of the RSU 440. Operation 610 involves determining, by the apparatus of the UE 401, a first vehicle to anything (V2X) message to be communicated to the eNB 450 for traffic offloading function (TOF) 460 processing. The apparatus of the UE 401 then, in operation 615, proceeds with encoding the first V2X message for transmission to the eNB 450 using a dedicated evolved packet system (EPS) bearer.

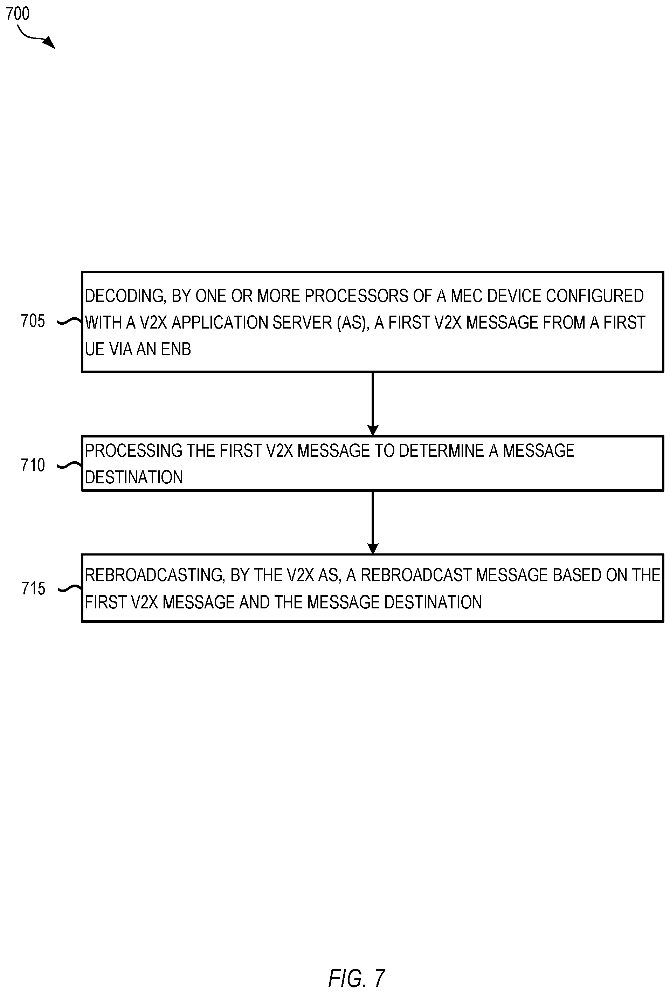

FIG. 7 illustrates one example method of MEC operation for V2X services, in accordance with some embodiments. Method 700 corresponds to certain ENB 450 operations associated with method 500 and describes the related operations performed at an AS/MEC server device supporting V2X services. In some embodiments, method 700 is performed by an apparatus similar to the baseband circuitry 1104 of FIG. 11. In other embodiments, other control circuitry 205 is configured to implement the operations of method 600. In still further embodiments, other aspects of an AS, including any circuitry for a device operating as described herein, may perform method 700. Further, in some embodiments, method 700 may be embodied in storage memory or non-transitory computer-readable media as instructions that, when executed by one or more processors of an AS configured to support V2X operations and, perform the operations of method 700. Method 700 may particularly be implemented by an AS in communication with a road side unit to provide signaling for V2X operations.

Method 700 involves an apparatus of an application server (e.g. MEC 470 or an AS local to an eNB/RSU) that decodes, in operation 705, a first vehicle to anything (V2X) message from a first user equipment (UE) wherein the first V2X message is received from the first UE 401 via an evolved node B (eNB) 450. In operation 710, the AS processes the first V2X message to determine a message destination, and in operation 715, the AS rebroadcasts a rebroadcast message based on the first V2X message and the message destination.

In some embodiments, one or more processes are disclosed to discriminate between V2X messages to be sent locally (either IP or non-IP) to be steered towards a local application server versus other generic IP traffic, not V2X related. Specifically, in some embodiments, the messages may be sent to an application server which, in turn, may decide whether or not the messages should be retransmitted.

In such embodiments, UE 401 may use one of the following when sending a V2V/V2P message to assist the traffic offload function in the eNB-based RSU 440: a well-known destination transport address; a dedicated EPS bearer; and/or an indication in PDCP or MAC header regarding the fact that the packet included in the data unit is a V2V/V2P message. In such embodiments the message can be carried as either IP packet or non-IP packet.

Embodiments described here may assume that a vehicle-mounted UE 401 has a permanently established "macro" PDN connection (e.g. a PDN connection with a PGW residing deep inside the mobile operator's network 320. This PDN connection may be used for all V2X traffic, including both V2N/V2I traffic with a V2N/V2I application server residing in the network 320, as well as V2V/V2P messages that are received by a local V2V/V2P application server (typically collocated with the eNB 450). In the latter case, the local V2V/V2P application server may decide to re-broadcast the received V2V/V2P message using MBMS or similar multicast functionality (e.g. single cell PTM).

As described above, in various embodiments, a number of options may be used to identify V2V/V2V messages at the traffic offload function (TOF) 460 in an eNB-based RSU 440.

In one option, the system operation assumes that the V2P/V2V messages use a well-known destination transport address (i.e. destination IP address and/or destination port number). By only looking at the destination transport address fields in the IP packet, the traffic offload function (TOF) 460 in an eNB-based RSU 440 may extract the V2P/V2V messages from the overall traffic flow and steer them towards the local V2V/V2P application server.

In another option, when establishing the "Macro" PDN connection, the network 320 establishes one or several dedicated EPS bearers that are used specifically for transport of V2V/V2P messages. Other traffic (e.g. V2N/V2I messages) may not be sent on the dedicated EPS bearer for V2V/V2P. The dedicated EPS bearer for V2V/V2P may be identified at the UE 401 and the eNB 450 by using a special QCI value, or by using an explicit NAS and S1-AP signaling parameter. The TOF 460 in an eNB-based RSU 440 may extract all traffic arriving on the dedicated EPS bearer for V2V/V2P and steers it to the local V2V/V2P application server.

In another option an indication is included in MAC reserved bits in uplink (UL) or downlink (DL) shared channels (SCH) or a multicast channel (MCH). The MAC header is of variable size and consists of the following fields: logical channel identifier field; length field; format field; format2 field, extension field; and reserved bit.

In one embodiment, the logical channel ID field identifies the logical channel instance of the corresponding MAC SDU or the type of the corresponding MAC control element or padding as described in tables 6.2.1-1, 6.2.1-2 and 6.2.1-4 for the DL-SCH, UL-SCH and MCH respectively. There is one LCID field for each MAC SDU, MAC control element or padding included in the MAC PDU. In addition to that, one or two additional LCID fields are included in the MAC PDU, when single-byte or two-byte padding is fixed but cannot be achieved by padding at the end of the MAC PDU. A UE 401 of category 0 indicates a common control channel (CCCH) using LCID "01011", otherwise the UE 401 shall indicate CCCH using LCID "00000" with an LCID field size is 5 bits.

In such embodiments, the length field indicates the length of the corresponding MAC SDU or variable-sized MAC control element in bytes. There is one L field per MAC PDU subheader except for the last subheader and subheaders corresponding to fixed-sized MAC control elements. The size of the L field is indicated by the format (F) field and format 2 (F2) field. The format field indicates the size of the length field. There is one F field per MAC PDU subheader except for the last subheader and subheaders corresponding to fixed-sized MAC control elements and expect for when F2 is set to 1. The size of the F field is 1 bit. If the F field is included; if the size of the MAC SDU or variable-sized MAC control element is less than 128 bytes, the value of the F field is set to 0, otherwise it is set to 1. The F2 field indicates the size of the length field. There is one F2 field per MAC PDU subheader. The size of the F2 field is 1 bit. If the size of the MAC SDU or variable-sized MAC control element is larger than 32767 bytes, and if the corresponding subheader is not the last subheader, the value of the F2 field is set to 1, otherwise it is set to 0. The extension (E) field is a flag indicating if more fields are present in the MAC header or not. The E field is set to "1" to indicate another set of at least R/F2/E/LCID fields. The E field is set to "0" to indicate that either a MAC SDU, a MAC control element or padding starts at the next byte. In such embodiments, MEC operation for V2X uses a reserved bit equal to 0 for an IP packet and a reserved bit equal to 1 for a non-IP packet. Such an embodiment does not allow for identifying more than one non-IP protocol, as there is a single bit available. Additional embodiments described herein use other signals and do not have such a limitation.

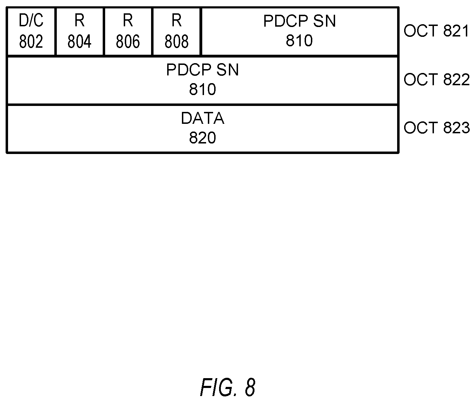

In a further option, an indication is included in PDCP reserved bits (R) in a PDCP data PDU. FIG. 8 illustrates such an embodiments with a communication message for MEC support in V2X services. FIG. 8 shows a format of the PDCP data PDU when a 12 bit SN length is used. FIG. 8 shows Data/Control field 802, reserve fields 804, 806, and 808, PDCP SN field 810, and data field 820. This format is applicable for PDCP data PDUs carrying data from data radio bearers (DRBs) mapped on radio link control (RLC) acknowledged mode (AM) or RLC unacknowledged mode (UM).

Not all of the PDCP PDU formats have reserved bits, depending on the size of the SN. Thus the UE 401 may use a PDU with a 12-bit SN, as V2X packets are small packets and individual packets are sent either periodically or based on an event, with the complete information contained in a single packet, with no need to follow a sequence. Such embodiments may allow identification of the IP protocol versus V2X message (e.g. carried in either IP or non-IP packet), as follows: reserved bits equal to 000 indicate IP packets, reserved bits equal to 001 indicate a V2X message in an IP packet, reserved bits equal to 010 indicate a V2X message in non-IP packet, and so on.

In some embodiments, usage of RLC header is a third option. However, when RLC transparent mode (TM) is used, there may be no header in RLC TM PDU, and so any such embodiment allow for this configuration. Additionally, some embodiments may operate with a new PDCP or MAC PDU format which would contain the information detailed above for IP versus non-IP protocol messages.

### EXAMPLE EMBODIMENTS

In various embodiments, methods, apparatus, non-transitory media, computer program products, or other implementations may be presented as example embodiments in accordance with the descriptions provided above. Certain embodiments may include UEs such as phones, tablets, mobile computers, or other such devices. Some embodiments may be integrated circuit components of such devices, such as circuits implementing MAC and/or LI processing in integrated circuitry. In some embodiments, functionality may be on a single chip or multiple chips in an apparatus. Some such embodiments may further include transmit and receive circuitry on integrated or separate circuits, with antennas that are similarly integrated or separate structures of a device. Any such components or circuit elements may similarly apply to evolved node B embodiments described herein.

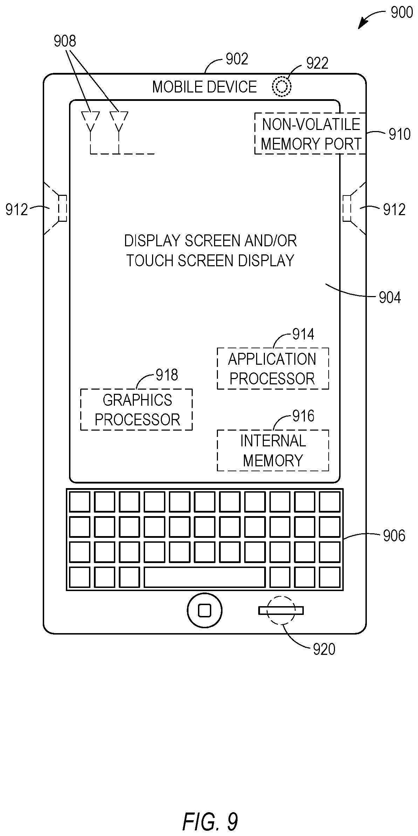

FIG. 9 shows an example UE, illustrated as a UE 900. The UE 900 may be an implementation of the UE 102, or any device described herein. The UE 900 can include one or more antennas 908 configured to communicate with a transmission station, such as a base station (BS), an eNB, or another type of wireless wide area network (WWAN) access point. The UE 900 can be configured to communicate using at least one wireless communication standard including 3GPP ETE, WiMAX, High Speed Packet Access (HSPA), Bluetooth, and WiFi. The UE 900 can communicate using separate antennas for each wireless communication standard or shared antennas for multiple wireless communication standards. The UE 900 can communicate in a WLAN, a wireless personal area network (WPAN), and/or a WWAN.

FIG. 9 also shows a microphone 920 and one or more speakers 912 that can be used for audio input and output to and from the UE 900. A display screen 904 can be a liquid crystal display (LCD) screen, or another type of display screen such as an organic light emitting diode (OLED) display. The display screen 904 can be configured as a touch screen. The touch screen can use capacitive, resistive, or another type of touch screen technology. An application processor 914 and a graphics processor 918 can be coupled to an internal memory 916 to provide processing and display capabilities. A non-volatile memory port 910 can also be used to provide data I/O options to a user. The non-volatile memory port 910 can also be used to expand the memory capabilities of the UE 900. A keyboard 906 can be integrated with the UE 900 or wirelessly connected to the UE 900 to provide additional user input. A virtual keyboard can also be provided using the touch screen. A camera 922 located on the front (display screen) side or the rear side of the UE 900 can also be integrated into a housing 902 of the UE 900.

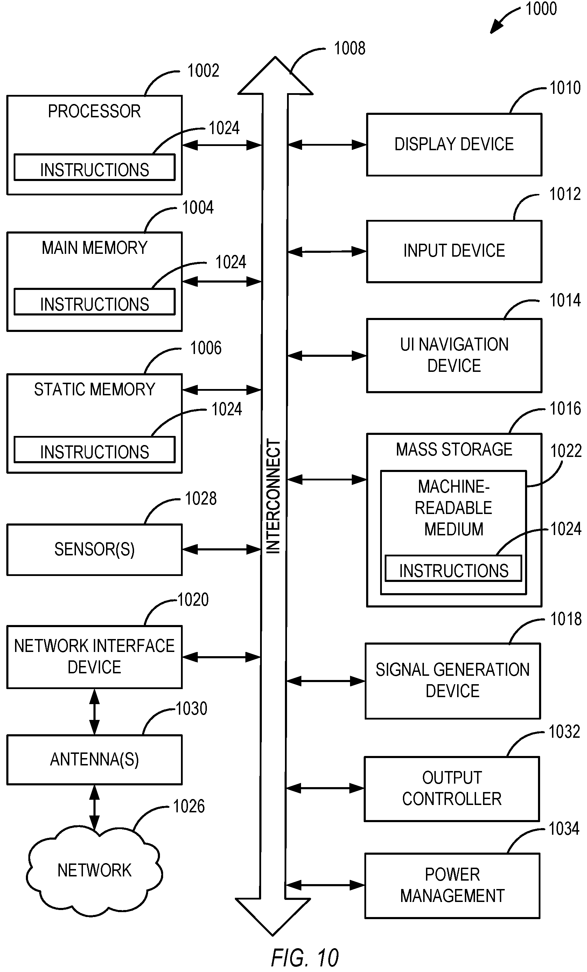

FIG. 10 is a block diagram illustrating an example computer system machine 1000 upon which any one or more of the methodologies herein discussed can be run, and which may be used to implement the eNB 104, the UE 102, or any other device described herein. In various alternative embodiments, the machine 1000 operates as a standalone device or can be connected (e.g., networked) to other machines. In a networked deployment, the machine 1000 can operate in the capacity of either a server or a client machine in server-client network environments, or it can act as a peer machine in peer-to-peer (or distributed) network environments. The machine 1000 can be a personal computer (PC) that may or may not be portable (e.g., a notebook or a netbook), a tablet, a set-top box (STB), a gaming console, a Personal Digital Assistant (PDA), a mobile telephone or smartphone, a web appliance, a network router, a network switch, a network bridge, or any machine capable of executing instructions (sequential or otherwise) that specify actions to be taken by that machine 1000. Further, while only a single machine 1000 is illustrated, the term "machine" shall also be taken to include any collection of machines that individually or jointly execute a set (or multiple sets) of instructions to perform any one or more of the methodologies discussed herein.

The example computer system machine 1000 includes a processor 1002 (e.g., a central processing unit (CPU), a graphics processing unit (GPU), or both), a main memory 1004, and a static memory 1006, which communicate with each other via an interconnect 1008 (e.g., a link, a bus, etc.). The computer system machine 1000 can further include a video display device 1010, an alphanumeric input device 1012 (e.g., a keyboard 906), and a user interface (UI) navigation device 1014 (e.g., a mouse). In one embodiment, the video display device 1010, alphanumeric input device 1012, and UI navigation device 1014 are a touch screen display. The computer system machine 1000 can additionally include a mass storage device 1016 (e.g., a drive unit), a signal generation device 1018 (e.g., a speaker), an output controller 1032, a power management controller 1034, a network interface device 1020 (which can include or operably communicate with one or more antennas 1030, transceivers, or other wireless communications hardware), and one or more sensors 1028, such as a GPS sensor, compass, location sensor, accelerometer, or other sensor.

The mass storage device 1016 includes a machine-readable medium 1022 on which is stored one or more sets of data structures and instructions 1024 (e.g., software) embodying or utilized by any one or more of the methodologies or functions described herein. The instructions 1024 can also reside, completely or at least partially, within the main memory 1004, static memory 1006, and/or processor 1002 during execution thereof by the computer system machine 1000, with the main memory 1004, the static memory 1006, and the processor 1002 also constituting machine-readable media 1022.

While the machine-readable medium 1022 is illustrated in an example embodiment to be a single medium, the term "machine-readable medium" can include a single medium or multiple media (e.g., a centralized or distributed database, and/or associated caches and servers) that store the one or more instructions 1024. The term "machine-readable medium" shall also be taken to include any tangible medium that is capable of storing, encoding, or carrying instructions 1024 for execution by the machine 1000 and that cause the machine 1000 to perform any one or more of the methodologies of the present disclosure, or that is capable of storing, encoding, or carrying data structures utilized by or associated with such instructions 1024.

The instructions 1024 can further be transmitted or received over a communications network 1026 using a transmission medium via the network interface device 1020 utilizing any one of a number of well-known transfer protocols (e.g., hypertext transfer protocol (HTTP)). The term "transmission medium" shall be taken to include any medium that is capable of storing, encoding, or carrying instructions 1024 for execution by the machine 1000, and includes digital or analog communications signals or other intangible media to facilitate communication of such software.

Various techniques, or certain aspects or portions thereof, may take the form of program code (i.e., instructions 1024) embodied in tangible media, such as floppy diskettes, CD-ROMs, hard drives, non-transitory computer-readable storage media, or any other machine-readable storage medium wherein, when the program code is loaded into and executed by a machine 1000, such as a computer, the machine 1000 becomes an apparatus for practicing the various techniques. In the case of program code execution on programmable computers, the computing device may include a processor 1002, a storage medium 1016 readable by the processor 1002 (including volatile and non-volatile memory and/or storage elements), at least one input device 1012, and at least one output device. The volatile and non-volatile memory and/or storage elements may be a random access memory (RAM), erasable programmable read-only memory (EPROM), flash drive, optical drive, magnetic hard drive, or other medium for storing electronic data. The eNB and UE may also include a transceiver module, a counter module, a processing module, and/or a clock module or timer module. One or more programs that may implement or utilize the various techniques described herein may use an application programming interface (API), reusable controls, and the like. Such programs may be implemented in a high-level procedural or object-oriented programming language to communicate with a computer system. However, the program(s) may be implemented in assembly or machine language, if desired. In any case, the language may be a compiled or interpreted language, and combined with hardware implementations.

Various embodiments may use 3GPP LTE/LTE-A, Institute of Electrical and Electronic Engineers (IEEE) 1002.11, and Bluetooth communication standards. Various alternative embodiments may use a variety of other WWAN, WLAN, and WPAN protocols and standards in connection with the techniques described herein. These standards include, but are not limited to, other standards from 3GPP (e.g., HSPA+, UMTS), IEEE 1002.16 (e.g., 1002.16p), or Bluetooth (e.g., Bluetooth 9.0, or like standards defined by the Bluetooth Special Interest Group) standards families. Other applicable network configurations can be included within the scope of the presently described communication networks. It will be understood that communications on such communication networks can be facilitated using any number of personal area networks (PANs), local area networks (LANs), and wide area networks (WANs), using any combination of wired or wireless transmission mediums.

Embodiments described herein may be implemented into a system using any suitably configured hardware and/or software. FIG. 11 illustrates components of a device 1100, in accordance with some embodiments. At least some of the components shown may be used in the UE 102 (or eNB 104) shown in FIG. 1. The device 1100 and other components may be configured to use the synchronization signals as described herein. The device 1100 may be one of the UEs 102 shown in FIG. 1 and may be a stationary, non-mobile device or may be a mobile device. In some embodiments, the device 1100 may include application circuitry 1102, baseband circuitry 1104, radio frequency (RF) circuitry 1106, front-end module (FEM) circuitry 1108, and one or more antennas 1110, coupled together at least as shown. At least some of the baseband circuitry 1104, RF circuitry 1106, and FEM circuitry 1108 may form a transceiver. In some embodiments, other network elements, such as the eNB 104, may contain some or all of the components shown in FIG. 11. Other of the network elements, such as the MME 122, may contain an interface, such as the S1 interface 115, to communicate with the eNB 450 over a wired connection regarding the device 1100.

The application circuitry 1102 may include one or more application processors. For example, the application circuitry 1102 may include circuitry such as, but not limited to, one or more single-core or multi-core processors. The processor(s) 1002 may include any combination of general-purpose processors and dedicated processors (e.g., graphics processors, application processors, etc.). The processors may be coupled with and/or may include memory/storage and may be configured to execute instructions 1024 stored in the memory/storage to enable various applications and/or operating systems to run on the device 1100.

The baseband circuitry 1104 may include circuitry such as, but not limited to, one or more single-core or multi-core processors. The baseband circuitry 1104 may include one or more baseband processors and/or control logic to process baseband signals received from a receive signal path of the RF circuitry 1106 and to generate baseband signals for a transmit signal path of the RF circuitry 1106. The baseband circuitry 1104 may interface with the application circuitry 1102 for generation and processing of the baseband signals and for controlling operations of the RF circuitry 1106. For example, in some embodiments, the baseband circuitry 1104 may include a second generation (2G) baseband processor 1104a, third generation (3G) baseband processor 1104b, fourth generation (4G) baseband processor 1104c, and/or other baseband processor(s) 1104d for other existing generations, generations in development, or generations to be developed in the future (e.g., fifth generation (5G), etc.). The baseband circuitry 1104 (e.g., one or more of the baseband processors 1104a-d) may handle various radio control functions that enable communication with one or more radio networks via the RF circuitry 1106. The radio control functions may include, but are not limited to, signal modulation/demodulation, encoding/decoding, radio frequency shifting, etc. In some embodiments, modulation/demodulation circuitry of the baseband circuitry 1104 may include FFT, precoding, and/or constellation mapping/demapping functionality. In some embodiments, encoding/decoding circuitry of the baseband circuitry 1104 may include convolution, tail-biting convolution, turbo, Viterbi, and/or low density parity check (LDPC) encoder/decoder functionality. Embodiments of modulation/demodulation and encoder/decoder functionality are not limited to these examples and may include other suitable functionality in other embodiments.

In some embodiments, the baseband circuitry 1104 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1104e of the baseband circuitry 1104 may be configured to run elements of the protocol stack for signaling of the PHY, MAC, RLC, PDCP, and/or RRC layers. In some embodiments, the baseband circuitry 1104 may include one or more audio digital signal processor(s) (DSPs) 1104f. The audio DSP(s) 1104f may be or include elements for compression/decompression and echo cancellation and may include other suitable processing elements in other embodiments. Components of the baseband circuitry 1104 may be suitably combined in a single chip or a single chipset, or disposed on a same circuit board in some embodiments. In some embodiments, some or all of the constituent components of the baseband circuitry 1104 and the application circuitry 1102 may be implemented together, such as, for example, on a system on a chip (SOC).

In some embodiments, the baseband circuitry 1104 may provide for communication compatible with one or more radio technologies. For example, in some embodiments, the baseband circuitry 1104 may support communication with an EUTRAN and/or other wireless metropolitan area networks (WMAN), a WLAN, or a WPAN. Embodiments in which the baseband circuitry 1104 is configured to support radio communications of more than one wireless protocol may be referred to as multi-mode baseband circuitry 1104. In some embodiments, the device 1100 can be configured to operate in accordance with communication standards or other protocols or standards, including Institute of Electrical and Electronic Engineers (IEEE) 902.16 wireless technology (WiMax), IEEE 902.11 wireless technology (WiFi) including IEEE 902.11 ad, which operates in the 90 GHz millimeter wave spectrum, or various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc., technologies either already developed or to be developed.

The RF circuitry 1106 may enable communication with wireless networks 200 using modulated electromagnetic radiation through a non-solid medium. In various embodiments, the RF circuitry 1106 may include switches, filters, amplifiers, etc., to facilitate the communication with the wireless network 200. The RF circuitry 1106 may include a receive signal path which may include circuitry to down-convert RF signals received from the FEM circuitry 1108 and provide baseband signals to the baseband circuitry 1104. The RF circuitry 1106 may also include a transmit signal path which may include circuitry to up-convert baseband signals provided by the baseband circuitry 1104 and provide RF output signals to the FEM circuitry 1108 for transmission.

In some embodiments, the RF circuitry 1106 may include a receive signal path and a transmit signal path. The receive signal path of the RF circuitry 1106 may include mixer circuitry 1106a, amplifier circuitry 1106b, and filter circuitry 1106c. The transmit signal path of the RF circuitry 1106 may include the filter circuitry 1106c and the mixer circuitry 1106a. The RF circuitry 1106 may also include synthesizer circuitry 1106d for synthesizing a frequency for use by the mixer circuitry 1106a of the receive signal path and the transmit signal path. In some embodiments, the mixer circuitry 1106a of the receive signal path may be configured to down-convert RF signals received from the FEM circuitry 1108 based on the synthesized frequency provided by the synthesizer circuitry 1106d. The amplifier circuitry 1106b may be configured to amplify the down-converted signals, and the filter circuitry 1106c may be a low-pass filter (LPF) or band-pass filter (BPF) configured to remove unwanted signals from the down-converted signals to generate output baseband signals. Output baseband signals may be provided to the baseband circuitry 1104 for further processing. In some embodiments, the output baseband signals may be zero-frequency baseband signals, although this is not a requirement. In some embodiments, the mixer circuitry 1106a of the receive signal path may comprise passive mixers, although the scope of the embodiments is not limited in this respect.

In some embodiments, the mixer circuitry 1106a of the transmit signal path may be configured to up-convert input baseband signals based on the synthesized frequency provided by the synthesizer circuitry 1106d to generate RF output signals for the FEM circuitry 1108. The baseband signals may be provided by the baseband circuitry 1104 and may be filtered by the filter circuitry 1106c. The filter circuitry 1106c may include a low-pass filter (LPF), although the scope of the embodiments is not limited in this respect.

In some embodiments, the mixer circuitry 1106a of the receive signal path and the mixer circuitry 1106a of the transmit signal path may include two or more mixers and may be arranged for quadrature downconversion and/or upconversion respectively. In some embodiments, the mixer circuitry 1106a of the receive signal path and the mixer circuitry 1106a of the transmit signal path may include two or more mixers and may be arranged for image rejection (e.g., Hartley image rejection). In some embodiments, the mixer circuitry 1106a of the receive signal path and the mixer circuitry 1106a of the transmit signal path may be arranged for direct downconversion and/or direct upconversion, respectively. In some embodiments, the mixer circuitry 1106a of the receive signal path and the mixer circuitry 1106a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1106 may include analog-to-digital converter (ADC) and digital-to-analog converter (DAC) circuitry and the baseband circuitry 1104 may include a digital baseband interface to communicate with the RF circuitry 1106.

In embodiments where the electronic device 1100 is, implements, is incorporated into, or is otherwise part of an evolved NodeB (eNB) 450, the RF circuitry 1106 may be to receive a message, from a UE 900, on a dedicated EPS bearer. The RF circuitry 1106 may be further to send the message to an application server, AS, based on a determination. The baseband circuitry 1104 may be to identify the dedicated EPS bearer. The baseband circuitry 1104 may be further to determine if the received message is to be sent to the AS. The processes may include identifying, by the eNB 450, a dedicated EPS bearer. The process may further include receiving, by the eNB 450, a message on the EPS bearer. The process may further include determining, by the eNB 450, if the received message is to be sent to an application server, AS. The process may further include sending the message, by the eNB 450, to the AS based upon the determination.

In embodiments where the electronic device 1100 is, implements, is incorporated into, or is otherwise part of an application server (AS), the RF circuitry 1106 may be to receive a message from an evolved eNB 450 on a dedicated EPS bearer. Baseband circuitry 1104 may be to rebroadcast a rebroadcast message based upon the received message. The processes may include receiving, by the AS, a message from an eNB 450. The process may further include rebroadcasting, by the AS, a rebroadcast message based upon the received message.

In embodiments where the electronic device 1100 is, implements, is incorporated into, or is otherwise part of a UE 900, the baseband circuitry 1104 may perform operations determining, by the UE 900, a message to be offloaded to an eNB 450. RF circuitry 1106 may perform a process that may further include receiving, by the UE 900 from the eNB 450, an indication of whether the eNB 450 is a road side unit, RSU 440. The process may further include sending, by the UE 900, the message to the eNB 450, the message sent on a dedicated EPS bearer.

On other embodiments, any such circuitry of an AS, eNB 450, or UE 900 performs the operations or is configured to perform the operations of any embodiment described herein.

In some dual-mode embodiments, a separate radio IC circuitry may be provided for processing signals for each spectrum, although the scope of the embodiments is not limited in this respect.

In some embodiments, the synthesizer circuitry 1106d may be a fractional-N synthesizer or a fractional N/N+1 synthesizer, although the scope of the embodiments is not limited in this respect, as other types of frequency synthesizers may be suitable. For example, the synthesizer circuitry 1106d may be a delta-sigma synthesizer, a frequency multiplier, or a synthesizer comprising a phase-locked loop with a frequency divider.

The synthesizer circuitry 1106d may be configured to synthesize an output frequency for use by the mixer circuitry 1106a of the RF circuitry 1106 based on a frequency input and a divider control input. In some embodiments, the synthesizer circuitry 1106d may be a fractional N/N+1 synthesizer.

In some embodiments, frequency input may be provided by a voltage controlled oscillator (VCO), although that is not a requirement. Divider control input may be provided by either the baseband circuitry 1104 or the application circuitry 1102 depending on the desired output frequency. In some embodiments, a divider control input (e.g., N) may be determined from a look-up table based on a channel indicated by the application circuitry 1102.

The synthesizer circuitry 1106d of the RF circuitry 1106 may include a divider, a delay-locked loop (DLL), a multiplexer, and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 1106d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 1106 may include an IQ/polar converter.

The FEM circuitry 1108 may include a receive signal path, which may include circuitry configured to operate on RF signals received from the one or more antennas 1110, amplify the received signals, and provide the amplified versions of the received signals to the RF circuitry 1106 for further processing. The FEM circuitry 1108 may also include a transmit signal path, which may include circuitry configured to amplify signals for transmission provided by the RF circuitry 1106 for transmission by one or more of the one or more antennas 1110.

In some embodiments, the FEM circuitry 1108 may include a Tx/Rx switch to switch between transmit mode and receive mode operation. The FEM circuitry 1108 may include a receive signal path and a transmit signal path. The receive signal path of the FEM circuitry 1108 may include a low-noise amplifier (LNA) to amplify received RF signals and provide the amplified received RF signals as an output (e.g., to the RF circuitry 1106). The transmit signal path of the FEM circuitry 1108 may include a power amplifier (PA) to amplify input RF signals (e.g., provided by the RF circuitry 1106), and one or more filters to generate RF signals for subsequent transmission (e.g., by one or more of the one or more antennas 1110).

In some embodiments, the device 1100 may include additional elements such as, for example, a memory/storage, display, camera 922, sensor, and/or input/output (I/O) interface as described in more detail below. In some embodiments, the device 1100 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera 922, an access point, a television, a medical device (e.g., a heart rate monitor, a blood pressure monitor, etc.), or another device that may receive and/or transmit information wirelessly. In some embodiments, the device 1100 may include one or more user interfaces designed to enable user interaction with the system and/or peripheral component interfaces designed to enable peripheral component interaction with the system. For example, the device 1100 may include one or more of a keyboard 906, a keypad, a touchpad, a display, a sensor, a non-volatile memory port 910, a universal serial bus (USB) port, an audio jack, a power supply interface, one or more antennas 1110, a graphics processor, an application processor, a speaker, a microphone 920, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 1110 may comprise one or more directional or omnidirectional antennas, including, for example, dipole antennas, monopole antennas, patch antennas, loop antennas, microstrip antennas, or other types of antennas suitable for transmission of RF signals. In some multiple-input multiple-output (MIMO) embodiments, the antennas 1110 may be effectively separated to benefit from spatial diversity and the different channel characteristics that may result.

Although the device 1100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs), and combinations of various hardware and logic circuitry for performing at least the functions described herein. In some embodiments, the functional elements may refer to one or more processes operating on one or more processing elements.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client, or server computer system) or one or more hardware processors 1002 may be configured by firmware or software (e.g., instructions 1024, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

While the communication device-readable medium is illustrated as a single medium, the term "communication device-readable medium" may include a single medium or multiple media (e.g., a centralized or distributed database, and/or associated caches and servers) configured to store the one or more instructions 1024.

The term "communication device-readable medium" may include any medium that is capable of storing, encoding, or carrying instructions 1024 for execution by the communication device and that cause the communication device to perform any one or more of the techniques of the present disclosure, or that is capable of storing, encoding, or carrying data structures used by or associated with such instructions 1024. Non-limiting communication device-readable medium examples may include solid-state memories, and optical and magnetic media. Specific examples of communication device-readable media may include: non-volatile memory, such as semiconductor memory devices (e.g., EPROM, electrically erasable programmable read-only memory (EEPROM)) and flash memory devices; magnetic disks, such as internal hard disks and removable disks; magneto-optical disks; RAM; and CD-ROM and DVD-ROM disks. In some examples, communication device-readable media may include non-transitory communication device-readable media. In some examples, communication device-readable media may include communication device-readable media that is not a transitory propagating signal.

The instructions 1024 may further be transmitted or received over a communications network 1026 using a transmission medium via a network interface device 1020 utilizing any one of a number of transfer protocols (e.g., frame relay, internet protocol (IP), transmission control protocol (TCP), user datagram protocol (UDP), hypertext transfer protocol (HTTP), etc.). Example communication networks 1062 may include a LAN, a WAN, a packet data network (e.g., the Internet), mobile telephone networks (e.g., cellular networks), plain old telephone (POTS) networks, and wireless data networks (e.g., Institute of Electrical and Electronics Engineers (IEEE) 902.11 family of standards known as Wi-Fi^{®}, IEEE 902.16 family of standards known as WiMax^{®}), IEEE 902.15.4 family of standards, a Long Term Evolution (LTE) family of standards, a Universal Mobile Telecommunications System (UMTS) family of standards, or peer-to-peer (P2P) networks, among others. In an example, the network interface device 1020 may include one or more physical jacks (e.g., Ethernet, coaxial, or phone jacks) or one or more antennas 1110 to connect to the communications network 1026. In an example, the network interface device 1020 may include a plurality of antennas 1110 to wirelessly communicate using single-input multiple-output (SIMO), MIMO, or multiple-input single-output (MISO) techniques. In some examples, the network interface device 1020 may wirelessly communicate using multiple user MIMO techniques. The term "transmission medium" shall be taken to include any intangible medium that is capable of storing, encoding, or carrying instructions 1024 for execution by the communication device, and includes digital or analog communications signals or other intangible media to facilitate communication of such software.

In some systems, an eNB 450 may have multiple antennas 1110 that may be used in various groupings and with various signal modifications for each grouping to produce a plurality of APs. Each AP may be defined for one or more antennas 1110. Each AP may correspond to a different transmission signal direction. Using the different APs, the eNB 450 may transmit multiple layers with codebook-based or non-codebook-based precoding techniques. Each AP may correspond to a beam that transmits AP-specific CSI-RS signals. The UE 900 may contain a plurality of receive antennas 1110 that may be used selectively to create Rx beamforming. Rx beamforming may be used to increase the receive antenna (beamforming) gain for the direction(s) on which desired signals are received, and to suppress interference from neighboring cells. Fast Rx beam refinement, in which the Rx beam direction is dynamically adjusted in response to the channel conditions measured by the UE 900, is desirable from a performance standpoint.

This may be particularly desirable with use of the high-frequency bands around, for example, 28GHz, 37GHz, 39GHz, and 94-71GHz, used in conjunction with carrier aggregation, which may permit networks 1026 to continue to service the never-ending hunger for data delivery. The increased beamforming gain in this frequency range may permit the UE 900 and eNB 450 to compensate for the increasingly likely event of severe path loss and suppress mutual user interference, leading to an increase in system capacity and coverage.

Embodiments may be implemented in one or a combination of hardware, firmware, and software. Embodiments may also be implemented as instructions 1024 stored on a computer-readable storage device, which may be read and executed by at least one processor 1002 to perform the operations described herein. A computer-readable storage device may include any non-transitory mechanism for storing information in a form readable by a machine 1000 (e.g., a computer). For example, a computer-readable storage device may include read-only memory (ROM), RAM, magnetic disk storage media, optical storage media, flash-memory devices, and other storage devices and media. Some embodiments may include one or more processors 1002 and may be configured with instructions 1024 stored on a computer-readable storage device.

## Claims

1. An apparatus of a base station (450), the apparatus comprising:
a memory configured to store traffic offloading function, TOF, criteria for vehicle to anything, V2X, communications; and
processing circuitry in communication with the memory and arranged to:
encode an indication message from the base station (450) to a UE identifying the base station as part of a road side unit, RSU (440), supporting TOF, wherein the indication message comprises a V2X system information block, SIB, parameter;
decode a V2X message from the UE, wherein the V2X message is received via a dedicated evolved packet system, EPS, bearer for vehicle to vehicle, V2V, or vehicle to person, V2P, messages, and wherein the V2X message comprises a V2V message or V2P message;
determine a message destination for the V2X message based, at least in part, on the TOF criteria as used to determine message offloading for the RSU (440); and
encode the V2X message for transmission to the destination.

2. The apparatus of claim 1, wherein the TOF criteria comprise a set of known destination transport addresses, wherein the set of known destination transport addresses comprises a destination internet protocol IP address or a destination port number for each address of the set of known destination transport addresses.

3. The apparatus of claim 1, wherein the TOF criteria comprise an identifier for the dedicated EPS bearer for vehicle to vehicle, V2V, or vehicle to person, V2P, communications;
wherein the identifier for the first dedicated EPS bearer comprises one or more non-access stratum NAS and SI application protocol S1-AP signaling parameters.

4. The apparatus of claim 1, wherein the TOF criteria comprises one or more of:
a set of values associated with packet data convergence protocol, PDCP, reserve bits (804, 806, 808) in PDCP data protocol data units, PDU; a set of values associated radio link control, RLC, header bits; a set of values associated with medium access control, MAC, reserve bits in uplink/downlink shared channel, SCH, or multicast, MCH.

5. The apparatus of claims 1-4, wherein the indication message from the base station (450) identifying the base station (450) as part of the RSU (440) comprises a handover message comprising the V2X SIB parameter.

6. The apparatus of claims 1-4, further comprising:
an antenna coupled to the processing circuitry, wherein the antenna is configured to transmit the indication message to the UE (401) and receive the V2X message from the UE (401) wherein the antenna is further configured to transmit and receive using 180 kilohertz radio frequency bandwidth operation corresponding to a single physical resource block bandwidth.

7. A non-transitory computer-readable medium comprising instructions that, when executed by an apparatus of a base station (450), cause one or more processors of the apparatus to:
encode an indication message from the base station (450) to a UE (401) identifying the base station (450) as part of a road side unit, RSU (440), supporting traffic offloading function, TOF, wherein the indication message comprises a V2X system information block, SIB, parameter;
decode a vehicle to any, V2X, message from the UE (401), wherein the V2X message is received via a dedicated evolved packet system, EPS, bearer for vehicle to vehicle, V2V, or vehicle to person, V2P, messages, and wherein the V2X message comprises a V2V message or V2P message;
determine a destination for the V2X message based, at least in part, on the TOF criteria as used to determine message offloading for the RSU (440);
encode the V2X message for transmission to the destination.

8. The non-transitory computer-readable medium of claim 7, wherein the instructions further cause the apparatus to transmit the V2X message from the base station (450) to an application server operating as part of a mobile edge computing, MEC, server computer (470);
wherein the instructions further cause the apparatus to:
rebroadcast the V2X message using a single cell point to multipoint transmission, SC- PTM;
wherein the TOF criteria comprise an identifier for the dedicated EPS bearer for vehicle to vehicle, V2V or vehicle to person, V2P communications; and
wherein the identifier for the dedicated EPS bearer comprises one or more non-access stratum, NAS, and SI application protocol, S1-AP, signaling parameters or a quality of service, Q.OS, class identifier, Q.CI, value.

9. An apparatus of a user equipment UE (401), the apparatus comprising:
a memory configured to store an indicator value from a base station (450), indicating that the base station (450) is configured as part of a road side unit, RSU (440); and
processing circuitry in communication with the memory and arranged to:
decode an indication message from the base station (450), the indication message comprising the indicator value identifying the base station (450) as part of the RSU (440), wherein the indication message comprises a V2X system information block, SIB, parameter;
determine a vehicle to anything, V2X, message to be communicated to the base station (450) for traffic offloading function, TOF, processing;
encode the V2X message for transmission to the base station (450) using a dedicated evolved packet system, EPS, bearer for vehicle to vehicle, V2V, or vehicle to person, V2P, messages, and wherein the V2X message comprises a V2V message or V2P message.

10. The apparatus of claim 9, wherein the processing circuitry is further configured to set an indication in a packet data convergence protocol, PDCP, header of the V2X message when encoding the V2X message for transmission to the base station (450) using the dedicated EPS bearer;
wherein the indication is set in reserve bits of the PDCP header; and further comprising:
an antenna (908) coupled to the processing circuitry, wherein the antenna (908) is configured to receive the indication message from the UE and transmit the V2X message to the base station (450).

11. An apparatus of a base station (450), the apparatus comprising:
means for storing traffic offloading function, TOF, criteria for vehicle to anything, V2X, communications;
means for encoding an indication message from the base station (450) to a UE (401) identifying the base station (450) as part of a road side unit, RSU (440), supporting TOF, wherein the indication message comprises a V2X system information block, SIB, parameter;
means for decoding a V2X message from the UE (401) , wherein the V2X message is received via a dedicated evolved packet system, EPS, bearer for vehicle to vehicle, V2V, or vehicle to person, V2P, messages, and wherein the V2X message comprises a V2V message or V2P message;
means for determining a destination for the V2X message based, at least in part, on the TOF criteria as used to determine message offloading for the RSU; and means for encoding the V2X message for transmission to the destination.

## Patentansprüche

1. Vorrichtung einer Basisstation (450), wobei die Vorrichtung Folgendes umfasst: einen Speicher, der konfiguriert ist, Verkehrsauslagerungsfunktions-, TOF-, Kriterien für Fahrzeug-zu-allem-, V2X-, Kommunikationen zu speichern; und Verarbeitungsschaltung in Kommunikation mit dem Speicher und angeordnet zum:
Codieren einer Anzeigenachricht von der Basisstation (450) an ein UE, die die Basisstation als Teil einer straßenseitigen Einheit, RSU (440), identifiziert, die TOF unterstützt, wobei die Anzeigenachricht einen V2X-Systeminformationsblock-, SIB-, Parameter umfasst;
Decodieren einer V2X-Nachricht von dem UE, wobei die V2X-Nachricht über einen dedizierten Evolved-Packet-System-, EPS-, Träger für Fahrzeug-zu-Fahrzeug-, V2V-, oder Fahrzeug-zu-Person-, V2P-, Nachrichten empfangen wird, und wobei die V2X-Nachricht eine V2V-Nachricht oder V2P-Nachricht umfasst;
Bestimmen eines Nachrichtenziels für die V2X-Nachricht basierend, zumindest teilweise, auf den TOF-Kriterien, wie sie zum Bestimmen von Nachrichtenauslagerung für die RSU (440) verwendet werden; und Codieren der V2X-Nachricht zur Übertragung an das Ziel.

2. Vorrichtung nach Anspruch 1, wobei die TOF-Kriterien einen Satz von bekannten Zieltransportadressen umfassen, wobei der Satz von bekannten Zieltransportadressen eine Ziel-Internetprotokoll-, IP-, Adresse oder eine Zielportnummer für jede Adresse des Satzes von bekannten Zieltransportadressen umfasst.

3. Vorrichtung nach Anspruch 1, wobei die TOF-Kriterien eine Kennung für den dedizierten EPS-Träger für Fahrzeug-zu-Fahrzeug-, V2V-, oder Fahrzeug-zu-Person-, V2P-, Kommunikationen umfassen; wobei die Kennung für den ersten dedizierten EPS-Träger einen oder mehrere Nicht-Zugriffsschicht NAS und SI Anwendungsprotokoll S1-AP Signalisierungsparameter umfasst.

4. Vorrichtung nach Anspruch 1, wobei die TOF-Kriterien eines oder mehrere von Folgendem umfassen: einen Satz von Werten, die mit Paketdatenkonvergenzprotokoll-, PDCP-, Reservebits (804, 806, 808) in PDCP-Datenprotokolldateneinheiten, PDU, assoziiert sind; einen Satz von Werten, die mit Funkverbindungssteuerungs-, RLC-, Headerbits assoziiert sind; einen Satz von Werten, die mit Medienzugriffssteuerungs-, MAC-, Reservebits in Uplink/Downlink Shared Channel, SCH, oder Multicast, MCH, assoziiert sind.

5. Vorrichtung nach den Ansprüchen 1-4, wobei die Anzeigenachricht von der Basisstation (450), die die Basisstation (450) als Teil der RSU (440) identifiziert, eine Übergabenachricht umfasst, die den V2X-SIB-Parameter umfasst.

6. Vorrichtung nach den Ansprüchen 1-4, ferner umfassend:
eine Antenne, die mit der Verarbeitungsschaltung gekoppelt ist, wobei die Antenne konfiguriert ist, die Anzeigenachricht an das UE (401) zu übertragen und die V2X-Nachricht von dem UE (401) zu empfangen, wobei die Antenne ferner konfiguriert ist, unter Verwendung von 180-Kilohertz-Funkfrequenzbandbreite, die einer einzelnen physischen Ressourcenblockbandbreite entspricht, zu übertragen und zu empfangen.

7. Nichtflüchtiges computerlesbares Medium, das Anweisungen umfasst, die bei Ausführung durch eine Vorrichtung einer Basisstation (450) einen oder mehrere Prozessoren der Vorrichtung zu Folgendem veranlassen:
Codieren einer Anzeigenachricht von der Basisstation (450) an ein UE (401), die die Basisstation (450) als Teil einer straßenseitigen Einheit, RSU (440), identifiziert, die Verkehrsauslagerungsfunktion, TOF, unterstützt, wobei die Anzeigenachricht einen V2X-Systeminformationsblock-, SIB-, Parameter umfasst; Decodieren einer Fahrzeug-zu-allem-, V2X-, Nachricht von dem UE (401), wobei die V2X-Nachricht über einen dedizierten Evolved-Packet-System-, EPS-, Träger für Fahrzeug-zu-Fahrzeug-, V2V-, oder Fahrzeug-zu-Person-, V2P-, Nachrichten empfangen wird, und wobei die V2X-Nachricht eine V2V-Nachricht oder V2P-Nachricht umfasst;
Bestimmen eines Ziels für die V2X-Nachricht basierend, zumindest teilweise, auf den TOF-Kriterien, wie sie zum Bestimmen von Nachrichtenauslagerung für die RSU (440) verwendet werden;
Codieren der V2X-Nachricht zur Übertragung an das Ziel.

8. Nichtflüchtiges computerlesbares Medium nach Anspruch 7, wobei die Anweisungen die Vorrichtung ferner dazu veranlassen, die V2X-Nachricht von der Basisstation (450) an einen Anwendungsserver zu übertragen, der als Teil eines Mobile-Edge-Computing-, MEC-, Servercomputers (470) betrieben wird; wobei die Anweisungen die Vorrichtung ferner zu Folgendem veranlassen:
erneutes Rundsenden der V2X-Nachricht unter Verwendung einer Einzelzellenpunkt-zu-Mehrpunkt-Übertragung, SC-PTM;
wobei die TOF-Kriterien eine Kennung für den dedizierten EPS-Träger für Fahrzeug-zu-Fahrzeug-, V2V-, oder Fahrzeug-zu-Person-, V2P-, Kommunikationen umfassen; und
wobei die Kennung für den dedizierten EPS-Träger einen oder mehrere Nicht-Zugriffsschicht NAS und SI Anwendungsprotokoll S1-AP Signalisierungsparameter oder einen Dienstgüte Q.OS Klassenkennungs Q.CI Wert umfasst.

9. Vorrichtung eines Benutzergeräts UE (401), wobei die Vorrichtung Folgendes umfasst:
einen Speicher, der konfiguriert ist, einen Indikatorwert von einer Basisstation (450) zu speichern, der anzeigt, dass die Basisstation (450) als Teil einer straßenseitigen Einheit, RSU (440), konfiguriert ist; und
Verarbeitungsschaltung in Kommunikation mit dem Speicher und angeordnet zum:
Decodieren einer Anzeigenachricht von der Basisstation (450), wobei die Anzeigenachricht den Indikatorwert umfasst, der die Basisstation (450) als Teil der RSU (440) identifiziert, wobei die Anzeigenachricht einen V2X-Systeminformationsblock-, SIB-, Parameter umfasst;
Bestimmen einer Fahrzeug-zu-allem-, V2X-, Nachricht, die an die Basisstation (450) zur Verkehrsauslagerungsfunktions-, TOF-, Verarbeitung zu kommunizieren ist; Codieren der V2X-Nachricht zur Übertragung an die Basisstation (450) unter Verwendung eines dedizierten Evolved-Packet-System-, EPS-, Trägers für Fahrzeug-zu-Fahrzeug-, V2V-, oder Fahrzeug-zu-Person-, V2P-, Nachrichten, und wobei die V2X-Nachricht eine V2V-Nachricht oder V2P-Nachricht umfasst.

10. Vorrichtung nach Anspruch 9, wobei die Verarbeitungsschaltung ferner konfiguriert ist, eine Anzeige in einem Paketdatenkonvergenzprotokoll-, PDCP-, Header der V2X-Nachricht einzustellen, wenn die V2X-Nachricht zur Übertragung an die Basisstation (450) unter Verwendung des dedizierten EPS-Trägers codiert wird; wobei die Anzeige in Reservebits des PDCP-Headers eingestellt ist;
und ferner umfassend: eine Antenne (908), die mit der Verarbeitungsschaltung gekoppelt ist, wobei die Antenne (908) konfiguriert ist, die Anzeigenachricht von dem UE zu empfangen und die V2X-Nachricht an die Basisstation (450) zu übertragen.

11. Vorrichtung einer Basisstation (450), wobei die Vorrichtung Folgendes umfasst:
Mittel zum Speichern von Verkehrsauslagerungsfunktions-, TOF-, Kriterien für Fahrzeug-zu-allem-, V2X-, Kommunikationen;
Mittel zum Codieren einer Anzeigenachricht von der Basisstation (450) an ein UE (401), die die Basisstation (450) als Teil einer straßenseitigen Einheit, RSU (440), identifiziert, die TOF unterstützt, wobei die Anzeigenachricht einen V2X-Systeminformationsblock-, SIB-, Parameter umfasst;
Mittel zum Decodieren einer V2X-Nachricht von dem UE (401), wobei die V2X-Nachricht über einen dedizierten Evolved-Packet-System-, EPS-, Träger für Fahrzeug-zu-Fahrzeug-, V2V-, oder Fahrzeug-zu-Person-, V2P-, Nachrichten empfangen wird, und wobei die V2X-Nachricht eine V2V-Nachricht oder V2P-Nachricht umfasst;
Mittel zum Bestimmen eines Ziels für die V2X-Nachricht basierend, zumindest teilweise, auf den TOF-Kriterien, wie sie zum Bestimmen von Nachrichtenauslagerung für die RSU verwendet werden; und Mittel zum Codieren der V2X-Nachricht zur Übertragung an das Ziel.

## Revendications

1. Un appareil d'une station de base (450), l'appareil comprenant :
une mémoire configurée pour stocker des critères de fonction de délestage de trafic, TOF, pour des communications véhicule à tout, V2X ; et
une circuiterie de traitement en communication avec la mémoire et agencée pour :
coder un message d'indication provenant de la station de base (450) vers un UE identifiant la station de base comme faisant partie d'une unité de bord de route, RSU (440), prenant en charge la TOF, dans lequel le message d'indication comprend un paramètre de bloc d'informations système, SIB, V2X ;
décoder un message V2X provenant de l'UE, dans lequel le message V2X est reçu via un support de système de paquets évolué, EPS, dédié pour des messages véhicule à véhicule, V2V, ou véhicule à personne, V2P, et dans lequel le message V2X comprend un message V2V ou un message V2P ;
déterminer une destination de message pour le message V2X sur la base, au moins en partie, des critères de TOF tels qu'utilisés pour déterminer le délestage de message pour la RSU (440) ; et
coder le message V2X pour transmission à la destination.

2. L'appareil selon la revendication 1, dans lequel les critères de TOF comprennent un ensemble d'adresses de transport de destination connues, dans lequel l'ensemble d'adresses de transport de destination connues comprend une adresse de protocole Internet, IP, de destination ou un numéro de port de destination pour chaque adresse de l'ensemble d'adresses de transport de destination connues.

3. L'appareil selon la revendication 1, dans lequel les critères de TOF comprennent un identifiant pour le support EPS dédié pour des communications véhicule à véhicule, V2V, ou véhicule à personne, V2P ;
dans lequel l'identifiant pour le premier support EPS dédié comprend un ou plusieurs paramètres de signalisation de protocole d'application SI, S1-AP, et de couche sans accès, NAS.

4. L'appareil selon la revendication 1, dans lequel les critères de TOF comprennent un ou plusieurs parmi :
un ensemble de valeurs associées à des bits de réserve de protocole de convergence des données de paquet, PDCP, (804, 806, 808) dans des unités de données de protocole, PDU, de données PDCP ; un ensemble de valeurs associées au contrôle de liaison radio, RLC, bits d'en-tête ; un ensemble de valeurs associées à des bits de réserve de contrôle d'accès au support, MAC, dans un canal partagé, SCH, ou multicast, MCH, de liaison montante/liaison descendante.

5. L'appareil selon les revendications 1 à 4, dans lequel le message d'indication provenant de la station de base (450) identifiant la station de base (450) comme partie de la RSU (440) comprend un message de handover comprenant le paramètre SIB V2X.

6. L'appareil selon les revendications 1 à 4, comprenant en outre :
une antenne couplée à la circuiterie de traitement, dans lequel l'antenne est configurée pour émettre le message d'indication vers l'UE (401) et recevoir le message V2X à partir de l'UE (401), dans lequel l'antenne est en outre configurée pour émettre et recevoir en utilisant un fonctionnement en bande passante radiofréquence de 180 kilohertz correspondant à une bande passante de bloc de ressource physique unique.

7. Un support non transitoire lisible par calculateur comprenant des instructions qui, lorsqu'elles sont exécutées par un appareil d'une station de base (450), amènent un ou plusieurs processeurs de l'appareil à :
coder un message d'indication provenant de la station de base (450) vers un UE (401) identifiant la station de base (450) comme faisant partie d'une unité de bord de route, RSU (440), prenant en charge la fonction de délestage de trafic, TOF, dans lequel le message d'indication comprend un paramètre de bloc d'informations système, SIB, V2X ;
décoder un message véhicule à tout, V2X, provenant de l'UE (401), dans lequel le message V2X est reçu via un support de système de paquets évolué, EPS, dédié pour des messages véhicule à véhicule, V2V, ou véhicule à personne, V2P, et dans lequel le message V2X comprend un message V2V ou un message V2P ;
déterminer une destination pour le message V2X sur la base, au moins en partie, des critères de TOF tels qu'utilisés pour déterminer le délestage de message pour la RSU (440) ;
coder le message V2X pour transmission à la destination.

8. Le support non transitoire lisible par calculateur selon la revendication 7, dans lequel les instructions amènent en outre l'appareil à transmettre le message V2X de la station de base (450) à un serveur d'application fonctionnant dans le cadre d'un calculateur de serveur de calcul de périphérie mobile, MEC, (470) ;
dans lequel les instructions amènent en outre l'appareil à :
rediffuser le message V2X en utilisant une transmission de point de cellule unique à multipoint, SC- PTM ;
dans lequel les critères de TOF comprennent un identifiant pour le support EPS dédié pour des communications véhicule à véhicule, V2V, ou véhicule à personne, V2P ; et
dans lequel l'identifiant pour le support EPS dédié comprend un ou plusieurs paramètres de signalisation de protocole d'application SI, S1-AP, et de couche sans accès, NAS ou une valeur d'identifiant de classe de qualité de service, QOS, QCI.

9. Un appareil d'un équipement utilisateur, UE (401), l'appareil comprenant :
une mémoire configurée pour stocker une valeur d'indicateur provenant d'une station de base (450), indiquant que la station de base (450) est configurée comme faisant partie d'une unité de bord de route, RSU (440) ; et
une circuiterie de traitement en communication avec la mémoire et agencée pour :
décoder un message d'indication provenant de la station de base (450), le message d'indication comprenant la valeur d'indicateur identifiant la station de base (450) comme faisant partie de la RSU (440), dans lequel le message d'indication comprend un paramètre de bloc d'informations système, SIB, V2X ;
déterminer un message véhicule à tout, V2X, à communiquer à la station de base (450) pour le traitement d'une fonction de délestage de trafic, TOF ; coder le message V2X pour la transmission à la station de base (450) en utilisant un support de système de paquets évolué, EPS, dédié pour des messages véhicule à véhicule, V2V, ou véhicule à personne, V2P, et dans lequel le message V2X comprend un message V2V ou un message V2P.

10. L'appareil selon la revendication 9, dans lequel la circuiterie de traitement est en outre configurée pour définir une indication dans un en-tête de protocole de convergence de données de paquet, PDCP, du message V2X lors du codage du message V2X pour la transmission à la station de base (450) en utilisant le support EPS dédié ;
dans lequel l'indication est définie dans des bits de réserve de l'en-tête PDCP ; et comprenant en outre :
une antenne (908) couplée à la circuiterie de traitement, dans lequel l'antenne (908) est configurée pour recevoir le message d'indication à partir de l'UE et transmettre le message V2X à la station de base (450).

11. Un appareil d'une station de base (450), l'appareil comprenant :
un moyen pour stocker des critères de fonction de délestage du trafic, TOF, pour des communications véhicule à tout, V2X ;
un moyen pour coder un message d'indication provenant de la station de base (450) vers un UE (401) identifiant la station de base (450) comme faisant partie d'une unité de bord de route, RSU (440), prenant en charge la TOF, dans lequel le message d'indication comprend un paramètre de bloc d'informations système, SIB, V2X ;
un moyen pour décoder un message V2X provenant de l'UE (401), dans lequel le message V2X est reçu via un support de système de paquets évolué, EPS, dédié pour des messages véhicule à véhicule, V2V, ou véhicule à personne, V2P, et
dans lequel le message V2X comprend un message V2V ou un message V2P ;
un moyen pour déterminer une destination pour le message V2X sur la base, au moins en partie, des critères de TOF tels qu'utilisés pour déterminer le délestage de message pour la RSU ; et
un moyen pour coder le message V2X pour la transmission à la destination.
